# EUROPEAN PATENT APPLICATION

(11) **EP 4 844 645 A1**
(43) Date of publication of application: **25.11.2026**
(21) Application number: 26162611.3
(22) Date of filing: 05.03.2026
(51) Int. Cl.: G06Q 10/04, G06Q 50/02, A01B 79/00, G06T 15/00, G06V 20/10

(54) **DECISION-SUPPORT METHOD FOR AGRONOMIC MANAGEMENT**

(30) Priority: 20.05.2025 IT 202500011392
(71) Applicant: Agrobit S.r.l., 50123 Firenze (FI) (IT)
(72) Inventor: KARTSIOTIS, Simon Paolo, 50144 Firenze (FI) (IT)
(74) Representative: Ripamonti, Enrico

(57) **Abstract**

A decision-support method for agronomic management for an optimization of the management of agricultural operations, comprising a sequence of phases defined by: a) acquisition (12), by means of an acquisition device (10) equipped with camera and GPS module of at least one georeferenced photographic scan of a crop portion, b) automatic uploading (14) of the images acquired on a remote server based on cloud architecture or local processing on the acquisition device in the absence of a network (14'), c) generation (16), starting from the uploaded images, of a three-dimensional model (3D point cloud) of the crop portion, through photogrammetric processing, d) automatic processing (18) of the acquired photos and the three-dimensional model through artificial intelligence and computer vision algorithms for the extraction of biometric and biophysical parameters of the crop such as canopy height, thickness and volume, vigour indices such as Leaf Area Index (LAI), Leaf Wall Area (LWA), Tree Row Volume (TRV), identification of phytopathologies, fruit count, yield estimation, e) automatic determination (20) of doses of phytosanitary mixture (agrochemical + water), f) automatic creation of vegetative variability maps and prescription maps (24) following multiple scans performed on the same plot, g) generation (26) of reports containing the results of the processing and operational indications for the treatments.

## Description

The present invention relates to a decision-support method for agronomic management.

More specifically, the present invention relates to a decision-support method for optimizing the agronomic management of agricultural operations for farms and the like.

Even more particularly, the present invention relates to a method for the objective analysis of agricultural crops to allow farmers and technicians to have agronomic indications useful for the optimization of crop operations, including phytosanitary treatments.

To analyse crops and optimise crop operations, several methods and tools have been developed to collect plant data, monitor the health status of crops and improve the effectiveness of treatments.

Methods based on the use of meteorological stations and forecast models that suggest the ideal times to perform the treatments or methods using satellite data (in the form of maps) are known.

However, such methods have poor resolution in the modelling of tree crops and do not provide precise indications with reference, in particular, to phytosanitary treatments.

Other known methods of analysis use the camera of a tablet or smartphone device to acquire photographic images of the canopy of the vines in order to calculate the vegetative vigour (or LAI index - leaf area index, a biometric parameter used to measure vegetation cover) and the doses to be distributed for phytosanitary treatments.

However, this method has significant drawbacks related to the fact that it is specifically dedicated to a type of crop (the vine) and does not provide biometric data such as thickness, height, canopy volume or field data such as the leaf wall area (or LWA) or the tree row volume (or TRV) useful for an optimization of operations such as fertilization, harvesting, phytosanitary treatments and the like.

Another well-known method provides a mapping platform for crop monitoring, with the aid of drones and other remote technologies to obtain high-resolution images of the crops; the data collected is then analysed to optimise the use of agrochemicals, fertilizers and other crop operations.

However, this method has significant drawbacks related to the fact that it does not perform automatic measurements, requires a certain technical competence in the analysis and interpretation of data and, in addition, the use of drones can entail high costs, both hardware and software to process the data, especially in larger agricultural areas.

Other known methods make use of infrared sensors and machine vision technologies mounted on tractors or quads to analyze crop health and density, particularly in vineyards and tree crops, where vegetation cover is measured and data is provided to improve the application of phytosanitary treatments.

This method, however, presents high costs for the significant investments in sensors and for the long time required to monitor numerous hectares.

Further known methods use lidar sensors mounted on tractors or quads to analyse crops and, in particular, makes use of 3D models to monitor plant growth and estimate in real time the doses of mixture for phytosanitary treatments, providing detailed information to optimise the application of agrochemicals and fertilisers in a highly targeted manner.

However, such a method may require significant investment, both in terms of technology purchase and training for personnel, it may require high computational capacity to handle and analyze the three-dimensional data, as well as stable and fast connection, and moreover, lidar sensors are subject to wear and maintenance and could be influenced by environmental factors such as rain, cloudiness, and terrain variability.

Further known methods use ultrasonic sensors mounted on tractors or quads to estimate biometric data and the optimal doses of phytosanitary mixture.

However, these methods may require high investments and adequate training, and moreover, they are subject to wear and maintenance and could be influenced by environmental factors or soil variability.

The object of the present invention is to obviate the aforementioned drawbacks.

More particularly, the object of the present invention is to provide a decision-support method for agronomic management adapted to make digital agriculture accessible and scalable and to optimise/reduce the use of chemical inputs and water in tree crops.

Even more particularly, the object of the present invention is to provide a decision-support method for agronomic management adapted to obtain biometric and biophysical parameters of the plants for an optimal and possibly lowest possible dosage of the quantities of phytosanitary mixture (water + agrochemical) supplied to the crops.

A further object of the present invention is to provide a decision-support method for agronomic management adapted to generate maps of vegetative vigour/variability and crop prescription to also optimise other agricultural operations such as fertilization or fruit harvesting.

A further object of the present invention is to provide a decision-support method for agronomic management adapted to improve the economic and environmental sustainability and productivity of crops.

A further object of the present invention is to provide a decision-support method for agronomic management that is simple and quick to use as well as economical.

A further object of the present invention is to provide users with a decision-support method for agronomic management able to guarantee high reliability and also such that it can be economically and simply implemented.

A further object of the present invention is to identify phytopathologies, count the number of fruits and estimate the yield of the plots.

A further object of the present invention is to create a company history on the data of the crops and treatments made to guarantee better traceability and greater control by certifying bodies.

These and other objects are achieved by the invention having the characteristics referred to in claim 1.

According to the invention there is provided a decision-support method for agronomic management aimed at optimizing the agronomic management of agricultural operations for farms and the like, comprising a sequence of operational steps defined by: a) acquisition, by means of an acquisition device equipped with a camera and GPS module, of at least one georeferenced photographic scan of a crop portion (row, plant or tree), b) automatic uploading of the acquired images to a remote server based on cloud architecture, or local processing on the device (edge) in the absence of a network, c) generation, from the acquired images, of a three-dimensional model of the crop portion, by photogrammetric processing, d) processing of the three-dimensional model by means of artificial intelligence and computer vision algorithms for the extraction of biometric and biophysical parameters of the crop as well as for the identification of phytopathologies, fruit count and yield estimation, e) automatic determination of doses of phytosanitary mixture (water + agrochemical); f) automatic creation of maps of vegetative variability and prescription maps; g) generation of reports containing the results of the processing and operational indications for the treatments.

Advantageous embodiments of the invention arise from the dependent claims.

The construction and functional characteristics of the decision-support method for agronomic management can be better understood from the detailed description that follows, in which reference will be made to the attached drawings that depict an embodiment given as an illustrative and non-limiting example only and in which:

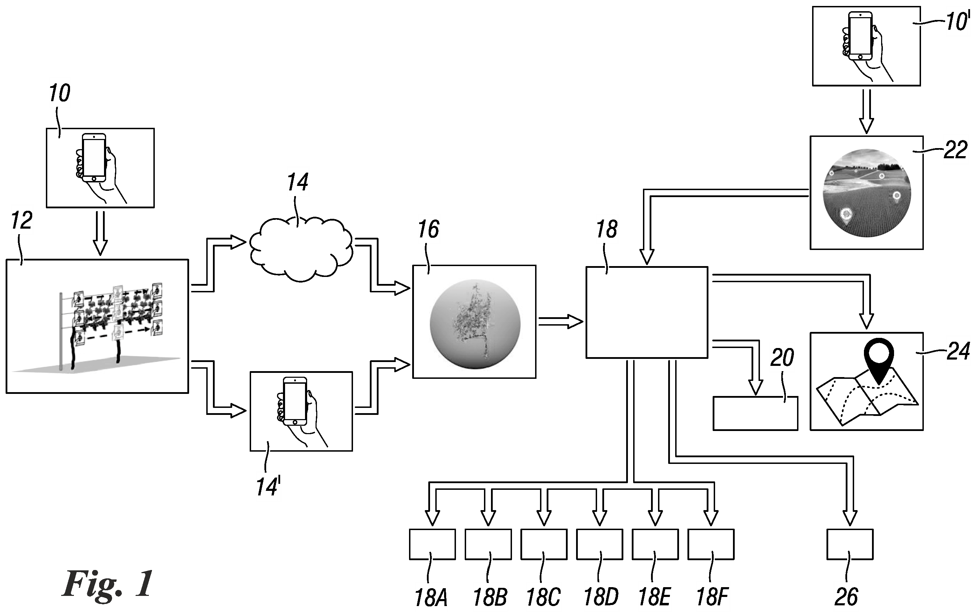

figure 1 illustrates a functional diagram of the decision-support method for agronomic management of the present invention.

With reference to the aforementioned figure, the decision-support method for agronomic management of the present invention comprises the use of an acquisition device (block 10) consisting of a mobile phone of the smartphone type or other device such as, for example, a tablet, a camera, a stereoscopic camera or the like equipped with a dedicated application, with said device used to make surveys and photographic acquisitions (using the camera of the acquisition device itself) of portions of rows or trees of another type of crop (block 12) to be analysed, the resulting photographs being uploaded (in real time or later) to a remote cloud server (block 14), or processed locally on the acquisition device (edge) in the absence of a network (block 14'), in which the photographic images are analysed and processed to generate a three-dimensional model (3D point cloud) (block 16) of the row or plant portion or similar for a subsequent calculation of biometric and biophysical parameters of the crop (block 18), for the identification of phytopathologies by means of photographs and predictive models of phytopathologies/insects, fruit count and yield estimation and for an estimation and definition of the correct quantities of phytosanitary mixture (water + agrochemical) to be distributed on crops (block 20).

The photographic scanning carried out through the acquisition device (block 10) allows, by means of augmented reality algorithms (VSLAM (Visual Simultaneous Localization and Mapping), visual odometry) and using GPS (Global Positioning System) and IMU (Inertial Measurement Unit) of the device, to generate georeferenced photos.

The calculation of biometric and biophysical parameters (block 18) is carried out using artificial intelligence and computer vision algorithms that calculate the biometric and biophysical characteristics of the crop (block 18A) (defined by canopy height, thickness and volume), the vigour index LAI (Leaf Area Index) (block 18B), the leaf wall area index per hectare LWA (Leaf Wall Area) (block 18C), the tree row volume index per hectare TRV (Tree Row Volume) (block 18D), the identification of phytopathologies (block 18E), the fruit count and yield estimation (block 18F).

The processing of the images loaded on the remote cloud server (block 14), or processed locally on the device in the event of the absence of a network (block 14'), by means of the acquisition device 10 is carried out using photogrammetry software that reconstructs a 3D point cloud processed by means of dedicated algorithms for the calculation of the biometric and biophysical parameters, of the vigour index LAI, of the LWA index (Leaf Wall Area), of the TRV index (Tree Row Volume), the identification of phytopathologies, the fruit count and yield estimation, as defined above, with the result of said process being returned to the acquisition device for the georeferenced display thereof.

In accordance with the method of the invention, using the same acquisition device (block 10') it is possible to carry out repeated scans (block 22) at multiple points of the crop row or the plot of land comprising the crops of interest to generate maps (block 24) of vegetative vigour/variability by spatialising the LAI index (Leaf Area Index) with spatial interpolation algorithms and prescription maps to optimise in particular, but not only, phytosanitary treatments.

Prescription maps are typically maps with one, two or three classes (doses of phytosanitary mixture) that can also be imported into variable rate machinery (VRT), i.e. machinery capable of reading prescription maps to provide differentiated treatment following the indications provided by the map itself, thanks to the use of the geolocation system (GPS - Global Positioning System).

The processing for the automatic generation of vegetative vigour/variability maps is carried out starting from the data generated from the processing of the 3D point clouds of several plants within the plot and takes as input the georeferenced data of the biophysical parameters (vigour index LAI) and dose of phytosanitary mixture and spatialises them according to an IDW (Inverse Distance Weighting) algorithm to create the spatial maps of said parameters.

Furthermore, in accordance with the method of the invention, it is possible to create tabular reports and temporal evolutionary maps of the plot (block 26); said reports may be useful as a functional company history to constitute a support for further agronomic decisions of the fertilization, harvesting and similar type.

All the aforementioned data (photos, 3D models, table data, maps) can be exported outside the application in common formats (.jpg, .tiff, .xlsx, .shp).

The decision-support method of the invention also includes the possibility of displaying weather forecasts by means of external API (Application Programming Interface) calls to allow a user to consult 7-day hyper-local weather forecasts for the plot with the main climatic parameters (maximum and minimum temperatures, rain, wind speed and direction, humidity) and display three-hourly optimal time windows for carrying out phytosanitary treatments.

In addition, the method includes the possibility of viewing an agrochemical database (always by means of an external API call) and this in order to allow, in the creation of the survey, to search for the agrochemicals of interest in an external database created and kept updated by third parties (possibility of consulting the labels of the agrochemicals, assigning the appropriate doses based on the manufacturer's prescriptions, etc.).

Furthermore, the method of the invention comprises the possibility of displaying the 3D point cloud (three-dimensional model referred to in block 16) in real time during the acquisition phase, with the aim of allowing the user to immediately display what he is shooting with the camera of the acquisition device to improve the acquisition process itself and the user experience.

By way of example, the decision-support method for agronomic management of the present invention is divided into a procedure as described below.

An operator, once the application referred to in the method has been started on a mobile phone or on a tablet or similar, proceeds through the following operational steps:
- entry (login) or registration of a new user-profile;
- creation of a business or similar entity;
- creation of a plot on the application by means of user inputs on a map and by entering types of crops and other information relating to the plot;
- creation of surveys for each plot in which it is possible to enter the phenological phase, type of atomiser present in the company or similar, diseases to be combated, dose of agrochemical, etc.;
- creation of guided photographic acquisitions using the camera of the acquisition device of the smartphone, tablet, camera, stereoscopic camera or similar type and the sensors of the same (IMU (Inertial Measurement Unit) and GPS (Global Positioning System) and thanks to augmented reality algorithms that calculate the pose of the acquisition device in space, the GPS path is recorded and the acquired images are georeferenced;
- uploading the captured images to the remote cloud server or processing locally (edge) on the device itself;
- display and export of the results for each acquisition in which the biometric and biophysical data of the analysed plant and the generated 3D point cloud are shown;
- visualization and export of spatial maps of vegetative vigour and prescription for optimised phytosanitary treatments;
- export of agronomic reports with all the results of each acquisition for each survey and for each plot generated.

As can be seen from the foregoing, the advantages achieved by the decision-support method for agronomic management of the present invention are evident.

The decision-support method for agronomic management of the present invention advantageously makes digital agriculture accessible and optimises/reduces the use of chemical inputs and water in tree crops.

A further advantage of the method of the invention is represented by the fact that it makes it possible to obtain biometric parameters of the plants for an optimal dosing of the quantities of phytosanitary mixture provided to the crops to improve the sustainability and productivity of the crops, taking advantage of the highly widespread and low-cost devices accessible to the widest audience of users.

A further advantage of the method of the invention is that it makes it possible to have a lower dispersion in the environment of agrochemicals (up to 50% less), a lower enrichment in groundwater of residues, a lower risk of exposure to chemical agents by operators in the sector and rural communities and also a lower impact of residues on the food chain.

A further advantage is represented by the fact that the method of the invention allows specific and optimised management to be carried out according to the variability monitored in the crop, planning differentiated interventions or, if available, using a VRT (Variable Rate Technology) technology and modulating in real time the supply of fertilizers, water, seeds, plant protection products and the like according to the actual needs of the soil or crop at a specific point in the field.

A further advantage of the method of the invention is represented by the fact that, thanks to the use of artificial intelligence, augmented reality and computer vision, it makes it possible to provide biometric and biophysical data accurately and in an extremely short time. A further advantage of the method of the invention is that it is easy to use even by non-expert users.

A further advantage of the method of the invention is represented by the fact that it is compatible with already existing technologies.

Although the invention has been described above with particular reference to an embodiment given merely by way of non-limiting example, numerous modifications and variations will be apparent to a person skilled in the art in the light of the above description. Therefore, the present invention intends to embrace all the modifications and variations which fall within the scope of the following claims.

## Claims

1. A decision-support method for agronomic management aimed at optimizing the agronomic management of agricultural operations for farms and the like, **characterised in that** it comprises a sequence of operational steps defined by:
a) acquisition (12), by means of an acquisition device (10) equipped with a camera and GPS module, of at least one georeferenced photographic scan of a portion of the crop (row, plant or tree);
b) automatic upload (14) of the acquired images to a remote server based on cloud architecture or local processing on the acquisition device (or edge) in the absence of network connectivity (14');
c) generation (16), from the uploaded images, of a three-dimensional model of the crop portion, by photogrammetric processing;
d) processing (18) of the three-dimensional model and of the images acquired by means of artificial intelligence and computer vision algorithms for the extraction of biometric and biophysical parameters of the crop and for the identification of phytopathologies (18E), the fruit count and yield estimation (18F), said biometric and biophysical parameters comprising at least:
- canopy height, thickness and volume (18A);
- vigour index LAI (Leaf Area Index) (18B),
- leaf wall area index per hectare LWA (Leaf Wall Area) (18C) ;
- tree row volume index per hectare TRV (Tree Row Volume) (18D);
e) automatic determination (20) of the optimal phytosanitary mixture (water + agrochemical) according to the biometric and biophysical parameters extracted;
f) automatic creation of vegetative variability maps and prescription maps (24) by means of repeated scans at multiple points of the crop row or the plot of land and spatialisation of the data by means of a spatial interpolation algorithm;
g) return of said biometric, biophysical parameters, maps and mixture doses to the acquisition device for their georeferenced display;
h) generation (26) of reports containing the results of the processing and operational indications for the treatments.

2. Method according to claim 1, **characterised in that** the photographic scanning step (block 12) is implemented by means of an acquisition device (block 10) of the smartphone, tablet, camera, stereoscopic camera or similar type, with scanning that uses augmented reality algorithms, the GPS and the IMU of the acquisition device to generate photos and georeferenced 3D point clouds.

3. The method according to claim 1 or 2, **characterised in that** the processing of the images loaded on the remote cloud server (block 14) or processed locally by the acquisition device (edge) (block 14') in the absence of a network, is carried out using photogrammetry algorithms that generate the three-dimensional model (block 16) and which, using artificial intelligence and computer vision algorithms, calculates the biometric and biophysical parameters of the crop, including thickness, height, canopy volume, LAI (Leaf Area Index), LWA (Leaf Wall Area) and TRV (Tree Row Volume) indices, the identification of phytopathologies by means of photographs and predictive models of phytopathologies/insects, the fruit count and yield estimation, with the results returned to the acquisition device for display.

4. Method according to claim 1, **characterised in that** the processing for the automatic generation of the maps of vegetative vigour (block 24) is carried out starting from the data generated by the 3D point cloud (block 16) and uses the georeferenced data of the biophysical parameters (for example, LAI index) and of the agrochemical doses, spatialising them by means of an IDW (Inverse Distance Weighting) algorithm to create the spatial maps of said parameters.

5. The method according to any of the preceding claims, **characterised in that** it comprises a step of implementing weather forecasts by means of calls to external APIs (Application Programming Interface), which allow the user to consult 7-day hyper-local weather forecasts for the plot of land and view the three-hourly optimal time windows for carrying out phytosanitary treatments.

6. The method according to any of the preceding claims, **characterised in that** it comprises the integration of an external agrochemical database, containing information on available agrochemicals and their methods of application.

7. The method according to any of the preceding claims, **characterised in that** the display of the 3D point cloud (block 16) takes place in real time during the acquisition phase (block 12), with dynamic updating of the displayed information.

8. Use of the decision-support method according to any one of the preceding claims, for the optimization of agronomic management in agricultural operations of farms or similar, including at least crop monitoring activities, estimation of phytosanitary mixture doses and optimization of phytosanitary treatments.
